# EUROPEAN PATENT APPLICATION

(11) **EP 3 056 736 A1**
(43) Date of publication of application: **17.08.2016**
(21) Application number: 16155301.1
(22) Date of filing: 11.02.2016
(51) Int. Cl.: F04C 2/18, F04C 18/344, F04C 23/00, F04C 11/00, F16F 15/30

(54) **VACUUM PUMP SYSTEM**

(30) Priority: 11.02.2015 GB 201502276
(71) Applicant: Flybrid Automotive Limited, Leyland, Lancashire PR26 7UX (GB)
(72) Inventor: JONES, Daniel, Bletchley, Buckinghamshire MK2 2DB (GB); DEAKIN, Andrew, Ardley, Oxfordshire OX27 7PR (GB)
(74) Representative: Midgley, Jonathan Lee

(57) **Abstract**

The application provides a flywheel system with a vacuum pump system comprising a first and a second pump where the outlet of one pump is coupled to the inlet of the other to provide a series arranged pair of pumps for evacuating the flywheel system.

## Description

The invention relates to flywheel systems and in particular to vacuum pump systems for such flywheel systems.

Flywheels typically comprise a relatively heavy mass, mounted on a shaft and arranged to rotate with the shaft. The use of flywheels in vehicles is known, for example in kinetic energy recovery systems for recovering kinetic energy from the movement of part or all of a vehicle and for returning that energy to the vehicle. Such systems are used in other applications, for example where energy is recovered from the boom of a working vehicle such as a loader. The kinetic or potential energy recovery is converted to kinetic energy of a flywheel.

The kinetic energy of a flywheel is directly proportional to the rotational inertia and the square of the angular velocity. A flywheel used for energy storage in a vehicle should achieve an optimum balance of mass, inertia and rotational speed. Consequently the faster the flywheel can be made to rotate, the smaller and lighter it will be for a given energy storage capacity.

High speed flywheels typically operate with maximum rotational speeds which are at least 15000 rpm. Such flywheels are usually contained within an enclosure to which a vacuum is applied, in order to reduce windage losses, i.e. energy losses caused by drag due to the movement of the flywheel through any fluid, e.g. air, in the enclosure. This helps to reduce the power consumption of the flywheel system, increasing the energy recoverable from the flywheel and also preventing the temperature of the flywheel from rising too high.

When a flywheel is contained within an evacuated enclosure, it is necessary to provide a seal between the housing and the shaft on which the flywheel is mounted, in order to allow the vacuum within the enclosure to be maintained. However, even with an effective seal, it is often necessary to "top-up" the vacuum by pumping any air that has leaked into the enclosure back out again, to maintain the very low pressure within the enclosure.

Creating the required vacuum level inside the enclosure can be challenging, particularly in creating it in the environment of a vehicle. Efficient vacuum pumps often require precision parts to achieve the desired vacuum pressures for flywheel operation. For example, a vacuum management system for a flywheel arrangement may include a precision pump in order to achieve the desired vacuum levels within the range of approximately 1 to 5 mbar.

However the costs of such precision pumps tends to restrict their application to non-vehicle applications and makes vehicle-type applications undesirably expensive. Furthermore, in high mileage commercial vehicles and other challenging conditions, such as construction vehicles, trucks, distribution vehicles, buses and so on, durability and reliability are important factors. This further complicates the specifications of vacuum pumps for these applications.

It is beneficial in a flywheel arrangement such as that described above to use a lubrication oil that runs at low viscosity (e.g. kinematic viscosity of 5 - 15 cS at operating temperature). This helps to reduce drag in the sealing arrangement, but can lead to increased leakage of fluid through the sealing arrangement into the flywheel chamber. Such fluid is also typically more volatile and so may compromise the vacuum. A highly efficient vacuum arrangement is thus beneficial for a sealing system that utilises a low viscosity oil.

There is therefore a need for a vacuum pump which is able to achieve low pressures with high reliability in challenging environments and at a cost which would not be prohibitive for vehicle-type applications. The present invention aims to provide a pump which achieves at least some of these aims.

Therefore in accordance with the present invention there is provided a flywheel system comprising a flywheel and a chamber within which said flywheel is provided, and a vacuum pump system for evacuating the chamber within which the flywheel is arranged to run, the vacuum pump system comprising: a first fluid pump having an inlet and an outlet; and a second fluid pump having an inlet and an outlet, wherein the inlet of the second pump is in communication with the outlet of the first pump and the inlet of the first pump is coupled to said chamber for evacuating said chamber.

The present invention may also provide a vacuum pump system comprising: a first fluid pump having an inlet and an outlet; and a second fluid pump having an inlet and an outlet, wherein the inlet of the second pump is in communication with the outlet of the first pump and inlet of the first pump is arranged for communication with said flywheel chamber.

The present invention also provides a vacuum pump system for evacuating a chamber within which a flywheel is arranged to run, the vacuum pump system comprising: a first fluid pump having an inlet and an outlet; and a second fluid pump having an inlet and an outlet, wherein the inlet of the second pump is in communication with the outlet of the first pump and inlet of the first pump is arranged for communication with said flywheel chamber.

The invention provides an efficient and compact arrangement which can achieve a high vacuum performance in a cost effective package. In particular, by utilising two comparatively low cost pumps arranged in series, similar pumping efficiency can be achieved at a cost for both pumps which is less than a more expensive single pump system.

The flywheel system preferably further comprises a carrier within which the first pump and the second pump are provided. By providing the pumps in a single carrier, the pumps can be provided and installed as a single unit and similarly removed for maintenance. This provides the convenience of a single pump body but with the improved performance and efficiency of a two pump system.

The carrier may include an internal channel connecting the inlet of the second pump to the outlet of the first pump. By providing the channel within the carrier, the need for external connections between the pumps is avoided, again simplifying the design and improving reliability.

The internal channel preferably extends substantially parallel to the axis of the carrier. In this way, the carrier is easily manufactured as a simple channel may be cast into the structure or machined into it. Also, a straight path between the pumps maximises the air flow between them avoiding any loss of efficiency due to flow around convoluted pipes.

The flywheel system may further comprise a drive shaft. In such an arrangement, the first fluid pump includes a first rotor and the second pump includes a second rotor and the first rotor and the second rotor are mounted on the drive shaft. Providing the rotors on a common drive shaft, ensures that they operate at the same speed and relative angular position (one relative to the other), and only a single drive input is needed. By ensuring that the pumps are synchronised, the cycles of the pumps can be synchronised, for example so that one pump is on an inlet phase whilst the other pump is on an outlet phase. In practice, the phases might be slightly offset but still synchronised to optimise pumping efficiency. For example, it is preferable that the second pump begins its suction phase when the first pump is near to completing its compression phase. Preferably, the first pump and second pump are driven to maintain a fixed angular phasing relative to one another.

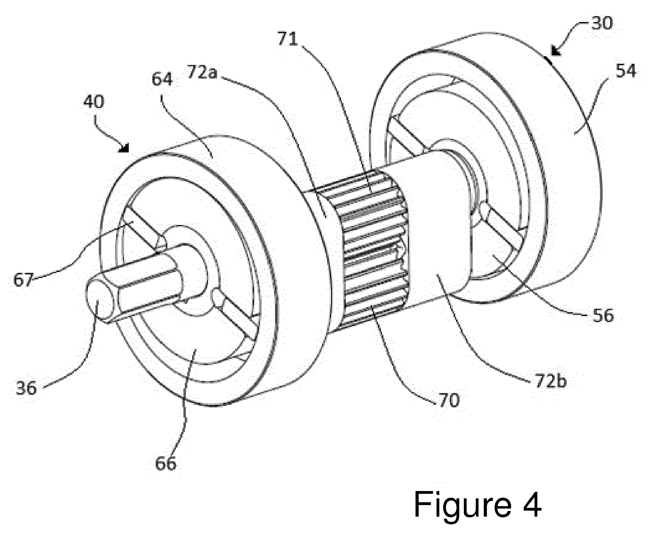

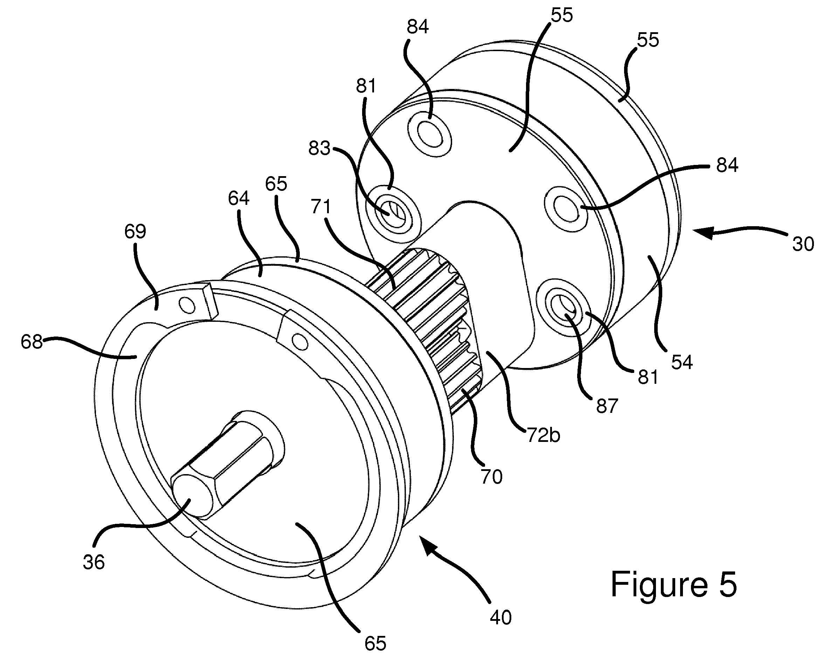

The angular offset of the pumping cycles is preferably set to optimise the pumping efficiency and therefore achieve the lowest pressure at the inlet to the first pump at an optimised pump speed. The angular offset is preferably in the range 190 to 220 degrees. More preferably the range extends from 200 degrees to 210 degrees. A further more preferable angular offset would be around 205 degrees. With the respective vanes of each rotor angularly aligned (as shown in Figure 4), this offset angle defines the offset of the second pump cam in the direction of rotation of the pump, relative to the first pump cam. That is to say, if the first pump cam were to be rotated in the sense of the drive shaft rotation by 205 degrees, then it would attain an angular orientation similar to that of the second cam. Such a configuration allows the use of the common port that runs parallel to the axis of the pump drive shaft. In the embodiment shown in Figures 4 and 5, the driveshaft is rotated in an anti-clockwise direction, as viewed from the driveshaft end.

The pump may be driven by a motor, such as an electric motor, and the optimised speed would be the driven speed of the motor. Alternatively, the pump may be driven by the flywheel and the optimised speed is that which corresponds to a running speed of the flywheel that enables rapid start-up of the flywheel system. This running speed may typically be less than 50% of the maximum rated speed of the flywheel. For example, if the flywheel is rated to run up to 40,000rpm then the lowest pump inlet pressure should be achieved at a flywheel speed of less than 20,000rpm. Once the chamber reaches the optimum pressure, maintaining this pressure is typically achievable with a lower pumping efficiency.

The vacuum pressure in the chamber is preferably less than 5 mbar, more preferably between 1 and 5 mbar and even more preferably between 1 and 3 mbar.

Optionally, the flywheel system may further comprise a third pump, the third pump being a lubricant pump. Such a lubricant pump can be used to provide lubricant to the various parts of the vacuum pump as well as to the flywheel system.

The third pump is preferably mounted on the drive shaft with the other pumps. Again, this allows all three pumps to be driven together by a single power input. Mounting the lubricant pump on the same shaft, also makes the overall vacuum pump system more compact and also easier to install as a single unit rather than as separate units.

The third pump is preferably arranged between the first and second pumps. Furthermore, the third pump is preferably arranged to pump lubricant fluid to the first and second pumps. By arranging the third pump between the other two pumps, it can be used to provide lubricant fluid out of each side, to the first and second pumps to provide lubrication to them. This can be achieved in a number of ways such as by providing channels but preferably by allowing the fluid to permeate through the gaps between the pump elements such as the drive shaft and the housing. This again helps to simplify the construction of the assembly whilst providing reliable lubricant supply.

The third pump may be a gear pump. Such a pump formed by two meshed gears can integrated easily into the structure of the housing between the two motors with one gear mounted on the drive shaft and the other gear freely rotating in the housing and driven by the first gear.

The flywheel system may be provided with a fluid reservoir wherein the outlet of the second pump is in communication with an inlet to the reservoir. The reservoir can serve a number of functions but can act to receive any fluids pumped by the pumps. This will primarily be the air removed from the flywheel system but this may also be contaminated with, for example, lubricating oil which enters the flywheel system. Feeding the second pump into the reservoir allows any such oil to be captured and recycled.

The third pump may use the reservoir as its own feed supply and so the reservoir may be at least partially filled with lubricant oil. In this way, the third pump can draw fluid from the reservoir. The third pump may feed fluid to various parts of the machine. Some of this may be in the form of a recirculating flow such that fluid is fed into some part and a return path brings the fluid back. This returning fluid can be fed back to the reservoir ready to be recycled.

The first and second pumps are preferably vane pumps. Such pumps can be conveniently incorporated into the integrated housing structure. Vane pumps also have good durability as the vanes naturally move to compensate for wear in the cam ring. Vane pumps are therefore suitable for applications requiring a long service life such as automobile applications, especially commercial vehicle applications such as buses, trucks and construction vehicles including loaders and excavators. The vane pumps may have any number of vanes but preferably they have two vanes per rotor.

The flywheel system is preferably mounted on a shaft with one or more seals provided around the shaft between the chamber and the shaft, to resist airflow into the chamber. Flywheels operate more efficiently in a vacuum and so sealing the chamber and evacuating it is important. It is therefore also important to maintain the lowered pressure in the chamber by providing good sealing, particularly around the shaft where there is the greatest likelihood of gaps through which air can enter the chamber. The seals help to isolate the evacuated portion of the chamber from the outside of the chamber and minimise any air ingress. The seals are preferably provided between the chamber and the bearings, so that the bearings are external to the chamber and therefore may be lubricated with any suitable oil. As this is outside the chamber, the choice of oil is not constrained by the bearings being within the evacuated chamber.

The seals may be a pair of lip seals and wherein a cavity is defined between the respective lip seals and the shaft, and fluid is provided to the cavity by the or a third pump. By providing a pair of lip seals separated along the shaft, the cavity is defined which can be filled with oil. The oil helps to prevent any air transiting through the cavity and into the chamber by forming a hermetic seal between the lip seals and the shaft. A small amount of oil may leak across the seal into the chamber, but any oil that does may also be extracted by the pumps, as mentioned above.

The cavity preferably includes an inlet and an outlet and said third pump provides fluid to the inlet to maintain a supply of oil, to replace oil which leaves the cavity either via the lips or from the outlet. This ensures the cavity is permanently full of oil.

The shaft may be mounted on one or more bearing arrangements and the third pump can provide fluid to the bearings to keep them lubricated, avoiding the need for separate lubricant supply. Preferably, there are two bearing arrangements, one at each side of the flywheel, with each seal separating the chamber from each respective bearing arrangement. This configuration provides an effective and stiff support structure for the flywheel, thus extending the life of the bearings and also avoiding resonance of the system.

The first fluid pump, the second fluid pump and the flywheel may be mechanically coupled to each other. This may be by sharing a common shaft but typically the pumps are geared to the shaft of the flywheel, as the flywheel speed may be undesirably high for the pumps' operation. The first fluid pump and second fluid pump may be coupled by a drive with ratio of magnitude 1 (either positive or negative) so that they run at the same speed.

Where it is provided, the third pump may be mechanically coupled to the flywheel. Optionally, the first fluid pump, the second fluid pump, the third pump and the flywheel may all be mechanically coupled to each other. The third pump preferably provides a feed of lubricant to at least one of the first fluid pump and the second fluid pump.

A specific embodiment of the present invention will now be described in more detail with reference to the drawings in which:
Figure 1 shows the basic operation of a vane pump;
Figure 2 shows the schematic layout of a flywheel system with vacuum and lubrication pumps;
Figure 3 shows a detailed schematic layout of the combined vacuum and lubrication pump of the present invention;
Figure 4 shows a partial perspective view of the main parts of the vacuum pump and lubrication pump; and
Figure 5 shows a different partial perspective view of the main parts of the vacuum pump and lubrication pump.

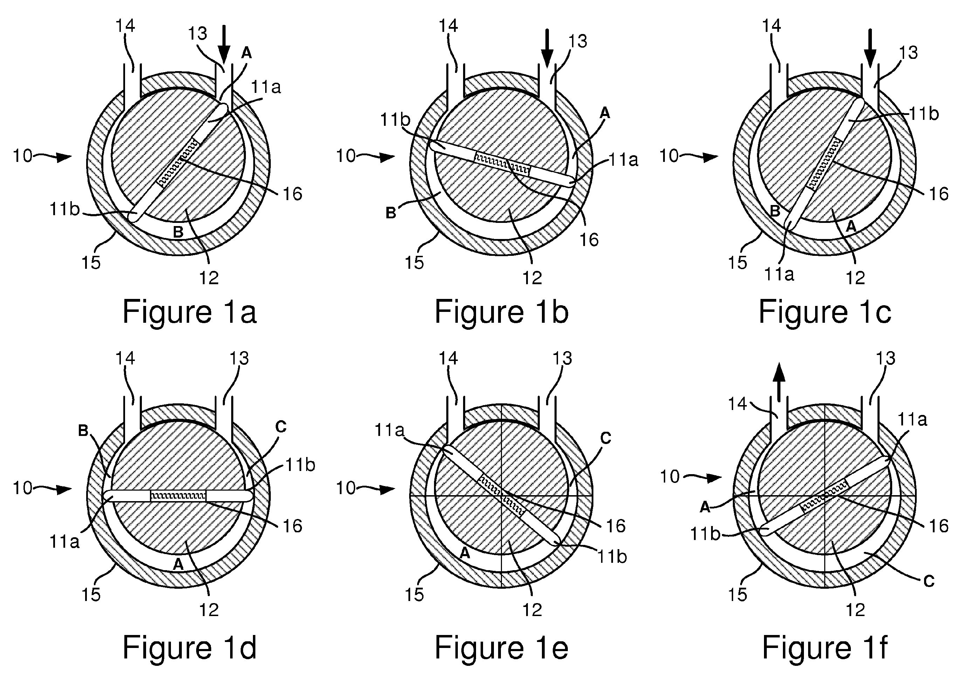

Figures 1a to 1f show the sequence of operation of a simple two-vane pump 10. The operation of vane pumps is fairly well-known and so is not described in detail here. However, the operation of the vane pump shown in Figure 1 is briefly described below.

The pump 10 includes a rotor 12 which is arranged to rotate within a chamber defined by a cam ring 15. The chamber and rotor are typically cylindrical, having circular cross-sections. However, the centres are eccentric, i.e. offset from each other, as can be seen in Figure 1. The rotor 12 is provided with two or more vanes, two are shown in Figure 1, which are inserted into the body of the rotor so that they project from the outer circumference. The vanes 11 a, 11 b are biased radially outward from the rotor, for example by a spring 16. The arrangement of the rotor within the cavity defined by the cam ring 15 produces a crescent-shaped cavity. At each end of this cavity is provided respective inlet 13 and outlet 14.

Referring to Figure 1a, the vanes 11 a, 11 b are biased outwardly so that they engage the sides of the cam ring to form an effective seal and define an enclosed volume between the surfaces of the vanes, the outer surface of the rotor and the inner surface of the cam ring.

As the rotor rotates from its position shown in Figure 1a, the enclosed volume labelled A in Figure 1 a increases in volume. As the rotor continues to rotate, as shown in Figure 1b, the volume A increases in size and the pressure in the volume A decreases, drawing fluid in through the inlet 13. At the same time the enclosed volume B begins to be reduced.

As the rotor continues to rotate the volume continues to expand drawing more fluid in through the inlet until the second vane 11 b reaches the inlet 13. As the second vane 11 b passes the inlet, the enclosed volume A is isolated from the inlet 13.

At this point a new volume C begins to expand drawing in fluid from the inlet 13. This volume continues to expand as the rotor rotates. The rotor continues to rotate through the position shown in Figure 1d. The volume A enclosed then stops expanding and begins to reduce in volume, increasing the pressure within the enclosed volume A. At the position shown in Figure 1e, the pressure is rising within the volume, as the vane 11 a approaches the outlet 14. As the vane 11 a passes the outlet 14, the pressure within the volume A causes the fluid to be passed out through it. As the rotor continues, the volume A is reduced continuously, forcing the contents out of the outlet. At the same time, the volume C continues to expand drawing fluid in from the inlet 13.

The rotor continues past the position shown in Figure 1 f. Eventually the second vane 11 b reaches the outlet 14, ejecting the rest of volume A out of the outlet. The vane 11 b then passes the outlet 14 and continues on to the position shown in Figure 1c. As the rotor continues to rotate, the process is repeated.

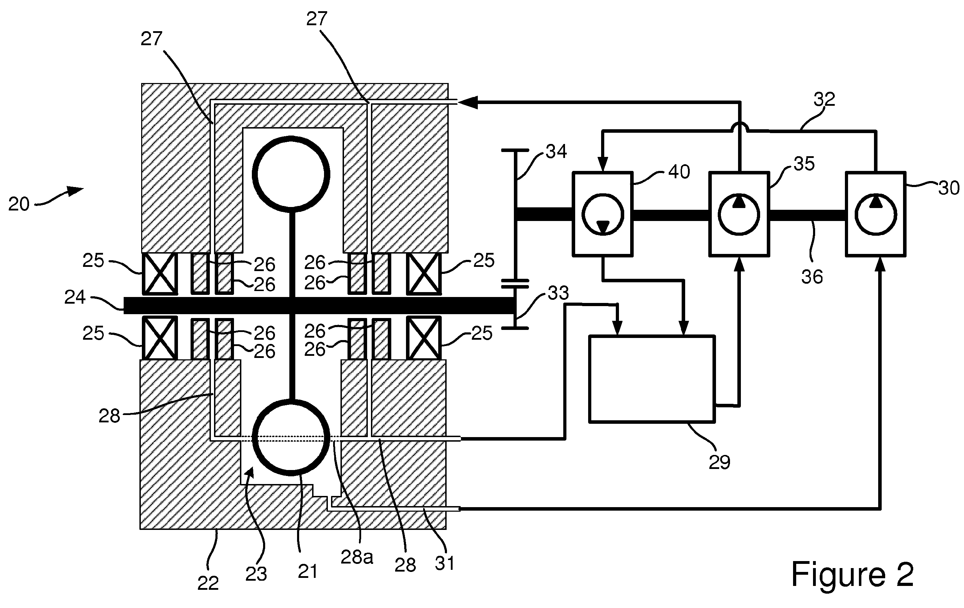

Figure 2 shows a schematic view of a flywheel system 20. Flywheel 21 is provided within a housing 22. The housing defines a chamber 23 within which the flywheel can rotate in use. The flywheel is mounted on a shaft 24 which is supported on bearings 25. In use, the chamber is maintained at a low pressure to reduce windage loss through rotation of the flywheel. In order to enclose the chamber 23, lip seals 26 are provided around the shaft 24. It is undesirable for the lip seals to maintain a contact with the shaft and so the space between the ends of the lip seal and the shaft are filled with an oil. The oil is provided to the space between the pairs of lip seals 26 through a channel 27 from a lubricating oil pump. Oil is provided through the channels 27 to the space between the lip seals so that it can fill the gap between the lip seals and the shaft and prevent air passing into the chamber 23. The oil provides a hermetic seal with shaft 24, reduces losses due to friction and reduces wear of the seals.

A pump 35 continuously pumps oil into the space between the lip seals 26 and then out again through passages 28, 28a. The passages 28 return the oil to an oil reservoir 29. It should be noted that the section of one of the passages 28, labelled 28a, shown in dotted line simply represents the hidden path of the channel 28 and does not pass through the chamber 23.

In order to provide and maintain the low pressure partial vacuum in the enclosure 23, a pump 30 is provided. The pump 30 draws any air within the enclosure 23 out through channel 31 and into intermediate channel 32. A second pump 40 then pumps any air in the intermediate channel 32 out into the oil reservoir 29.

It will be appreciated that oil present in the space between the lip seals 26 and the shaft 24 will potentially permeate along the shaft and be deposited within the chamber 23. Having entered the enclosure, the oil will tend to sink to the bottom of the chamber 23. The channel 31 is therefore provided at the bottom of the chamber 23 so that any oil which enters the chamber collects at the bottom and can be withdrawn by the pumps 30 and 40 from the enclosure. Any oil extracted in this way will be passed through pumps 30 and 40 and deposited into the oil reservoir 29 to be recovered.

The pump 30 is typically positioned beneath the chamber 23 (although this is not shown in the drawings) so that oil is encouraged to flow to the inlet of the pump 30. The reservoir 29 is typically positioned (again not shown in the drawings) above the inlet to lubrication pump 35, to assist with priming of the pump, and to potentially allow a lower cost lubrication pump (such as a geroter or impellor) to be used.

In this way, the vacuum pumps 30 and 40 provide the dual function of maintaining low pressure within the enclosure 23 but also removing the excess oil which collects in the flywheel enclosure 23.

In this arrangement, it will be appreciated that two pumps 30, 40 are provided to achieve low pressure within the enclosure 23. For example, for a system wishing to achieve a pressure ratio of 1000:1, the pressure ratio required to be generated by each pump is approximately 1:32 which is more easily achieved without the use of a high precision pump system.

Using two pumps in this manner allows a lower pressure to be achieved within the enclosure 23 than one of those pumps would be able to achieve on its own. Otherwise a more efficient vacuum pump would be required, such as one with higher precision parts for improved sealing, and this would be more costly.

As shown in Figure 2, the two vacuum pumps 30, 40 and the lubricating oil pump 35 are coaxially arranged on a common shaft. The shaft is driven directly from the flywheel using suitable gearing 33, 34. By providing the two vacuum pumps and the lubricating oil pump on a common shaft, they can be integrated into a single unit which can simplify the manufacturing process and reduce the cost of manufacture. As the combined unit only needs a single drive, it can be easily mounted on or adjacent to the flywheel housing, again simplifying the construction and allowing the flywheel and pumping arrangement to be provided in one package. This also enables some fluid to permeate from the lubrication pump through openings or between parts with a slight clearance between them. In this way, the vacuum pumps can be lubricated with more fluid than would otherwise be supplied from the flywheel chamber 23 alone. This can help to enhance the durability of the pumps. In the case of vane pumps, the sealing performance of the vanes against the sealing surfaces can also be improved by the supplementary fluid, thus enabling lower vacuum pressures to be achieved in chamber 23.

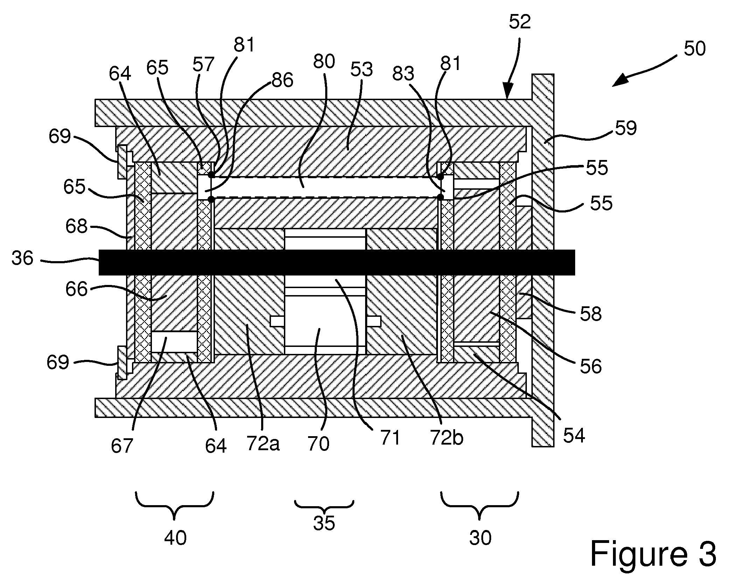

A schematic cross section through a pump assembly 50 including the two vacuum pumps 30, 40 and the lubricating oil pump 35 is shown in Figure 3. They are provided in a common housing 52 within which the pumps 30, 40, 35 are housed. The vacuum pumps 30, 40 are vane pumps similar to those shown in Figure 1. Each vane pump comprises a stack of components arranged along the axis of the pump drive shaft 36. The driveshaft is driven at the left hand end, as shown in Figure 3. The pump 30 is at the right hand end (farthest from the driven end), and the pump 40 is nearest the driveshaft end.

Pump 40 includes the rotor 66 mounted concentrically on the driveshaft 36 for location within a cam ring 64. The circular internal profile of the cam ring has a centre which is offset from the axis of the rotor and driveshaft, as can be seen in the sections in Figure 1. The rotor will typically be splined to engage the driveshaft.

The vanes 67 are outwardly biased (although this is not essential as centrifugal effects are typically strong enough to maintain the vanes in contact with the cam ring surface) from the rotor 66 and engage the inner surface of the cam ring 64. In pump 40, the lower vane 67 is visible and can been seen closing the gap between the outer edge of the rotor 66 and the cam ring 64. The vanes on the upper part of the rotor 66 and on rotor 56 are not visible in Figure 3 as they lie out of the cross section through the assembly.

The rotor 66 and cam ring 64 are arranged between a pair of endplates 65. The side faces of the rotor and axial faces of the vanes are machined flat and to the same dimensions, so that they may form a good axial seal against the endplates 65. The rotor and vane assembly is inserted into a tube assembly 53 which is provided with a circular recess for receiving the assembly. The tube assembly includes an inner section with reduced diameter forming a lip 57 against which one of the endplates 65 is engaged as it is inserted.

The first endplate 65 is inserted into the tube element 53 so that it engages the lip. The cam ring and rotor and vane assembly are then inserted to abut the endplate. Finally the second endplate is inserted to abut the cam ring and rotor/vane assembly. In this way, the tube assembly 53 acts as a carrier for a longitudinal "stack" of components arranged along the axis of the carrier, including the pump 40 and retaining elements, as well as the other pumps 30, 35 and other elements.

This stack of components is then held against the lip of the tube element using a clip 69 or bolted plate on the outer side of the tube element. Other fastening means may be used. A shim 68 is also optionally inserted in the stack to accommodate any slight differences in the axial dimensions of the rotor set (one set to another), such as may arise from variations in manufacturing processing.

The stack of components may also include a resiliently deformable member so that the rotor elements are slightly axially pre-loaded. The resiliently deformable member and the shim determine the slight axial load applied to the pumping elements. The resiliently deformable means may be a spring such as a disc spring, for example arranged next to the shim 68, but preferably it comprises a set of o-rings 81. These o-rings would hold the end plate 65 off the lip 57 providing a biasing axial load pushing against the clip 69. Some of the o-rings 81 seal the feeds 83, 86 and other feeds (not shown), into and out of each pump. As these feeds are not diametrically opposed to one another, additional anti-tilt o-rings 84 (see Figure 5) are used to provide a uniform axial load without generating a tilting moment. These additional o-rings are arranged around the drive shaft 36 to balance the load on the plate 65. These additional o-rings may also act as seals for other exit and entry channels for the pumps or may be solely for supporting the plate 65.

The second pump 30 is similar in construction to pump 40. Again, the rotor 56 is splined onto the driveshaft 36 and housed within a cam ring 54. These are arranged axially between a pair of endplates 55. The stack of components is inserted into the tube element 53 from the opposite end to pump 40. A first endplate 55 is inserted first, followed by the cam ring 54 and rotor/vane assembly. The second endplate 55 is then inserted into the tube element 53.

A further shim 58 is used to apply axial pressure on the outer end plate 55. This compresses the stack against a lip similar to lip 57 or, as shown in the drawings the o-ring 81 (and other o-rings and anti-tilt o-rings 84), to provide a resilient bearing surface. The tube element assembly may then be inserted into a housing 52. As can be seen in Figure 3, the housing is cup shaped, i.e. a generally cylindrical body with an end face 59. The shim 58 engages the inner surface of the end face 59 and as the tube element 53 is inserted into the housing, a force is provide against the shim, compressing the stack formed of the components of pump 30 against the biasing resistance provided by the o-rings 81, 84 and other resilient members not shown, to balance the axial load applied. The tube element 53 is held in the housing 52 to maintain the force on the shim 58 and elements of the pump. In this embodiment, a cover plate (not shown) is used to retain the tube in place. This cover plate determines the position of the tube within the housing, and this, together with the shim 58, determines the preload on the o-rings on the elements of the pump 30.

The drive shaft 36 may pass through the entire assembly, including through the end face 59 of the housing 52, as shown in Figure 3. Alternatively, it may only extend from the assembly at one end.

The rotor, cam ring, and vane surfaces are formed with hardened surfaces for increased durability. The endplates may have a hardened surface. The internal pump elements and the housing are ideally made from materials with a similar thermal expansion coefficient, to avoid mechanical foul or increased leakage due to differential expansion of different elements as the temperature changes. Preferably the internal pump elements are made from a steel.

As can be seen in Figure 3, the drive shaft 36 runs through the centre of the tube element 53. In the portion between the pump 30 and the pump 40 a number of spaces are provided. The first of these is a channel 80 extending from the outlet 83 of one pump 30 to the inlet 86 of the other pump 40. In this way, the connection between the pumps is enclosed within the tube element 53 avoiding the need for any external connections. As described above, o-rings 81 are provided at the mouths at each end of the channel 80. These o-rings provide the resilient biasing feature mentioned above but also help to provide a good seal between the channel 80 and the respective pumps to which they are connected. The channel 80 extends through the tube element 53 substantially parallel to the axis of the tube element (acting as the carrier), i.e. the longitudinal axis around which the elements of the pump and the driveshaft 36 rotate.

The inlet 87 (see Figure 5) of the first pump 30 is in communication with the channel 31 (Figure 2) from the chamber 23. Similarly, the outlet port of the pump 40 (not shown) is connected to the reservoir 29. The outlet port (not shown) of second pump 40 is angularly spaced apart from its inlet port 86 by an angle similar to the angle between the outlet port 83 of first pump 30 and inlet port of first pump 87.

The tube element further comprises a second space within it. This space is used to accommodate a lubrication pump 35. The lubrication pump 35 shown is a gear pump (but which may equally be a geroter or impellor type pump). The pump comprises a pair of gears 70, 71 meshed with one another, and adapted to transfer fluid from an inlet (not shown) to an outlet (not shown) of this pump. The inlet is positioned out of the plane of the page in Figure 3, and the inlet is positioned beneath the plane (as is known in the art of conventional gear pumps). The periphery of each gear is arranged in close proximity to the other to form a fluid seal where they mesh. The outer perimeter of each gear also forms a fluid seal with the suitably profiled internal surface of the tube element. This inner surface has the shape of a prismatic stadium, i.e. a stadium shape (two semicircles set apart with a rectangular portion between them, resembling a figure of eight modified to have flat sides, sometimes referred to as obround) extended in a direction perpendicular to the plane of the shape to form a three dimensional space.

The two gears have similar axial width and are located between prismatic members 72a, 72b (with a similar stadium cross-sectional shape). The prismatic members 72a, 72b and the gears 70, 71 all lie within a single stadium cross-section channel through the tube element 53. This allows the tube element to be formed with the simple single channel passing along its length, into which the prismatic members and the gears can be inserted during assembly. This simple channel can be easily formed during manufacture either by casting or machining.

The prismatic members 72a, 72b contain bearing journals that support the driveshaft 36. The gear 71 is mounted on and keyed to the drive shaft 36 so that it rotates with it. The prismatic members 72a, 72b also contain bearing journals that support a shaft of the gear 70. This allows the gear 70 to rotate freely as it is driven by gear 71.

Figures 4 and 5 show different partial perspective views of the main elements of the pump assembly with the housing and tube element removed. Figure 4 shows the prismatic members 72a, 72b as well as the pair of gears 70, 71 along with the internal components of the vane pumps 30, 40. Figure 5 shows a slightly different view with some additional components shown.

The periphery of each prismatic member forms a fluid seal with correspondingly shaped space within the tube element 53, by virtue of the small clearance between them. However, some fluid can bleed past the prismatic members due to clearance between them and the tube element 53. The prismatic members 72a, 72b may have axial slots in their outer surface that feed oil from the third pump to the first and second pumps. Such slots may be located towards the high pressure side (i.e. on or close to the outlet side) of the gear pump so that the oil being fed to the first and second pumps is slightly pressurised. The slots or clearances that constitute the oil feeds, and the location of these feeds with respect to the gear pumping elements, may be tailored to provide the optimum fluid flow to the first and second pumps. Fluid may also or alternatively be fed through the journal bearings along the drive shaft, in each axial direction, and these bearings may comprise slots or clearances (as described above for the prismatic members). This fluid lubricates the two vane pumps 30, 40 in order to reduce wear and enhance the sealing of the vanes pumps. This helps to improve the sealing performance of: the sliding vanes in their slots; the axial faces of the rotor and sealing endplates; the vanes and the cam rings and so on. In this way, the slight leakage of the lubrication pump provides improved durability and better performance of the vane pumps 30, 40.

As indicated above, the bleed of fluid past the prismatic members 72a, 72b can be used to lubricate the vane pumps. However, depending on the various tolerances and configuration of the various elements of the pumps, the quantity of fluid provided to some parts may not be optimal, e.g. it may be excessive in some places and insufficient in others. Furthermore, in some embodiments the third pump may not be adjacent to the first and second pumps 30, 40. Therefore, as well as, or instead of, relying on fluid bleeding past the prismatic members dedicated fluid feeds may be used to feed fluid from the pump 35 to other elements in the assembly, such as the pumps 30, 40. The fluid may be fed via channels within the various parts, such as the tube element 53, the prismatic members 72a, 72b etc. or via external couplings e.g. from the outlet of the fluid pump 35 to where the fluid is needed. Such an arrangement is known as a positive feed or a direct fluid feed, distributing fluid from the pumped outlet of the third pump to elements of each of the first and second pumps. Such feed or feeds may include a channel which may include an orifice to control the amount of fluid supplied, and to feed and direct the flow to appropriate parts of the pump. These parts may typically include the driveshaft, the rotors or the inlet of the first and/or second pump. As previously described, the feed channels may run from the appropriate part of the third pump, between its inlet and outlet but preferably from close to its outlet, so that the feed to the first and second pumps is suitably pressurised.

Each rotor 56, 66 is driven by the driveshaft 36. The two vanes within each rotor are mounted diametrically opposite one another. The cam rings 54, 64 of each pump are annular and the centres of their internal profiles are offset from the centre of the rotor drive shaft, as indicated above. The pair of vane pumps are mounted coaxially and driven by the common driveshaft that passes through the centre of both rotors. The eccentricity of the cam ring in one of the vane pumps is angularly displaced relative to the eccentricity of the cam ring in the other vane pump so that the compression region (exhaust or outlet) of the first pump 30 and the suction (inlet) region of the second pump 40 are approximately axially aligned, i.e. so that they lie at the same angular region relative to the driveshaft.

This arrangement enables the channel 80 connecting the two pumps to take the form of a simple channel running through the tube element, parallel to the drive shaft in the embodiment shown in Figure 3. This geometry also increases the volumetric efficiency of the pump system. In one embodiment, the vane pair of the rotors are arranged with substantially no angular offset relative to each other, but the eccentricity of the cam bores are phased approximately 205 degrees relative to each other. Preferably, the angular phasing of the first pump 30 relative to the second pump 40 is fixed. The first pump 30 is therefore exhausting fluid from its outlet 83 into the channel 80, whilst the second pump 40 is drawing fluid from channel 80 into its inlet 86.

It will be apparent that whilst the pumps 30, 40 are driven on a common driveshaft, their speeds will be the same. However, even if the pumps are not mounted on a common shaft, for example, with the pumps on separate drive shafts or driven by separate motors, their speeds will be matched to be in the ratio 1:1 (either a positive or negative ratio).

Figure 3 is intended to only schematically represent the angular position of the cam rings and common channel 80 and does not accurately reflect the values above. Figure 3 represents a roughly 205 degree offset of the cam rings with a large gap showing below the rotor in pump 40 and a negligible gap above the rotor. In contrast, gaps are visible between the rotor and cam ring on the pump 30 both above and below the rotor. For comparison, similar views would be obtained with sections through figure 1 a vertically for pump 40 and at 205 degrees offset for pump 30.

The angular values above are exemplary for this embodiment and different configurations may be more efficient or effective with different values. For example, the phasing may be tailored for a required driven speed of the pumps, as described earlier. These can be calculated according to the parameters of the assembly or derived empirically.

An advantage of this arrangement is that each vane pump may be made using standard machining operations, avoiding the need for 'lapping' of the parts to create the required seal. Additionally, the pumps can use common components, thus reducing cost because the parts may be produced in larger volumes.

The vacuum pump also serves to scavenge fluid (lubrication oil) from the bottom of the flywheel chamber and return it to a fluid reservoir 29. As a result the air pumped through the pumps 30 and 40 may include both air and oil. Air entrained in the fluid is preferably allowed to escape prior to the lubrication oil being pumped by the separate lubrication pump to the sealing cavity between the lip seals and/or the flywheel bearings. Preferably this separation occurs in the reservoir 29. The air/oil mixture is preferably fed into the top of the reservoir. This can help with the separation so that oil runs into the body of oil in the reservoir but the oil is not aerated by any air in the mixture. The air can then be collected in an air space above the oil and the reservoir provided with a breather to release it.

In the arrangement above, the lubrication pump is located between the vane pumps, and the three pumps are driven from a common shaft 36. The common shaft may be driven directly from the flywheel preferably using a suitable gearing ratio such as gears 33, 34 in Figure 2. The high speed of the flywheel is generally undesirable for pump operation and so the gearing down helps to avoid over-speeding the pumps.

Alternatively, the driveshaft 36 may be driven directly by an electric motor (or other means such as off some other component, such as the main engine, of a vehicle on which it is mounted). This can be advantageous as the pumps can be operated irrespective of the rotation speed of the flywheel. If the drive is taken directly off the flywheel, then if the flywheel is stationary, the pumps will not operate. This may mean that the vacuum state is not maintained and lubrication oil is not provided to the bearings. However, a motor driven driveshaft can be enabled on demand to top up the vacuum in the flywheel chamber and to ensure adequate lubrication of the bearings and seals irrespective of the rotation of the flywheel.

This feature of driving the pumps independently of the flywheel shaft may be utilised on different configurations of oil and/or vacuum pumps than the embodiment above to provide vacuum and/or oil function irrespective of whether the flywheel is operating.

The first, second and/or third pumps may be alternatively driven from the vehicle driveline such as the final drive, or from a flywheel transmission adapted for transferring energy to/from the flywheel.

In the embodiment above, the pump system is used for evacuating a flywheel chamber. However, it will be appreciated that the vacuum pump system of the invention may be used in other applications than flywheel applications, including applications where different pressures are required, even those outside the scope of flywheel operation.

## Claims

1. A flywheel system comprising a flywheel and a chamber within which said flywheel is provided, and a vacuum pump system for evacuating the chamber within which the flywheel is arranged to run, the vacuum pump system comprising:
a first fluid pump having an inlet and an outlet; and
a second fluid pump having an inlet and an outlet, wherein the inlet of the second pump is in communication with the outlet of the first pump and the inlet of the first pump is coupled to said chamber for evacuating said chamber.

2. A flywheel system according to claim 1, further comprising a carrier within which the first pump and the second pump are provided.

3. A flywheel system according to any one of the preceding claims, further comprising a drive shaft, and wherein the first fluid pump includes a first rotor and the second pump includes a second rotor and the first rotor and the second rotor are mounted on the drive shaft.

4. A flywheel system according to any one of the preceding claims, further comprising a third pump, said third pump being a lubricant pump.

5. A flywheel system according to claim 4, wherein said third pump is arranged between the first and second pumps.

6. A flywheel system according to any one of claims 4 or 5 wherein said third pump is arranged to pump lubricant fluid to the first and second pumps.

7. A flywheel system according to any one of the preceding claims wherein said flywheel is mounted on a shaft and one or more seals are provided around said shaft between said chamber and the shaft, to resist airflow into the chamber.

8. A flywheel system according to claim 4 to 6, wherein:
said flywheel is mounted on a shaft, and one or more seals are provided around said shaft between said chamber and the shaft, to resist airflow into the chamber;
said shaft is mounted on one or more bearings; and
the third pump provides fluid to said bearings.

9. A flywheel system according to claim 7 or 8, wherein said one or more seals include a pair of lip seals and wherein a cavity is defined between the respective lip seals and the shaft.

10. A flywheel system according to claim 9 arranged such that oil entering the chamber from the cavity is directed to an outlet from said chamber coupled to said first pump.

11. A flywheel system according to any one of the preceding claims, further comprising a fluid reservoir and wherein the outlet of the second pump is in communication with an inlet to the reservoir.

12. A flywheel system according to any one of the preceding claims, wherein said first and second pumps are vane pumps.

13. A flywheel system according to any one of the preceding claims, wherein at least one of said first fluid pump and said second fluid pump is provided with a lubricant fluid supply.

14. A flywheel system according to claim 13, wherein said lubricant fluid is supplied to at least an inlet to the pump.

15. A flywheel system according to either of claims 13 or 14, wherein said lubricant fluid is supplied to at least the drive shaft of the pump.

16. A flywheel system according to any one of claims 13 to 15, wherein said lubricant fluid is supplied to at least the rotor of the pump.
